# EUROPEAN PATENT APPLICATION

(11) **EP 4 148 381 A1**
(43) Date of publication of application: **15.03.2023**
(21) Application number: 22192120.8
(22) Date of filing: 25.08.2022
(51) Int. Cl.: G01C 15/00, G01S 7/481

(54) **LASER SCANNING APPARATUS, LASER SCANNING METHOD, AND LASER SCANNING PROGRAM**

(30) Priority: 13.09.2021 JP 2021148621
(71) Applicant: TOPCON CORPORATION, Tokyo 174-8580 (JP)
(72) Inventor: MORITA, Hideki, Tokyo, 174-8580 (JP); TOKUDA, Yoshikatsu, Tokyo, 174-8580 (JP)
(74) Representative: Eisenführ Speiser

(57) **Abstract**

Scanning density of laser scanning is increased at low cost. A laser scanning apparatus (100) includes a vertical rotation unit (114) and a controller (105). The vertical rotation unit (114) emits pulses of laser scanning light. The controller (105) controls emission of pulses of the laser scanning light. Assuming that a symbol "n" is a natural number of one or more, the controller (105) controls so that a position in a rotation direction of emission of pulses of the laser scanning light for (n+1)th rotation of the vertical rotation unit (114) will be different from that for nth rotation of the vertical rotation unit.

## Description

### BACKGROUND OF THE INVENTION

### Technical Field

The present invention relates to a technique for laser scanning.

### Background Art

Some known laser scanning apparatuses are configured to emit laser scanning light from a rotary body that is rotating (for example, refer to Japanese Unexamined Patent Application Publication No. 2021-47068).

Laser scanning is typically performed radially, and therefore, the laser scanning pitch (interval between adjacent beams of scanning light) increases as the scanning light travels further into the distance. Thus, the scanning density is decreased at a distant target position. In order to avoid this problem, a method (first method) of reducing speed of scanning, or a method (second method) of shortening an interval of emission of scanning light, may be employed.

The first method may be performed by using an optical system that is rotated. Rotation may be slowed down while the interval of emission of scanning light is not changed. The rotation is performed by a motor, but slowing down rotation of the motor makes unevenness in rotation conspicuous. The unevenness in rotation adversely affects measurement accuracy of an angle.

The unevenness in rotation can be reduced by devising a method of driving a motor, or a gear structure, but this incurs high cost. The second method, which is a method for shortening an interval of emission of scanning light, can increase cost and size of a light emission component.

### SUMMARY OF THE INVENTION

In view of these circumstances, an object of the present invention is to provide a technique for increasing scanning density of laser scanning at low cost.

The present invention provides a laser scanning apparatus including a first rotary body and a controller. The first rotary body is configured to emit pulses of laser scanning light while rotating. The controller is configured to control emission of pulses of the laser scanning light. Pulses of the laser scanning light are emitted in a direction orthogonal to a rotation axis of the first rotary body. The controller is further configured to, assuming that a symbol "n" is a natural number of one or more, shift a position of emission of pulses of the laser scanning light in the emission direction for (n+1)th rotation of the first rotary body, from a position of emission of pulses of the laser scanning light in the emission direction for nth rotation of the first rotary body.

In one aspect of the present invention, timing of emission of pulses of the laser scanning light for the nth rotation may be determined by a first periodic signal. In this case, assuming that a symbol "m" is a natural number of one or more, timing of emission of pulses of the laser scanning light for (n+m)th rotation may be determined by an (m+1)th periodic signal. The first periodic signal to the (m+1)th periodic signal may have the same frequency but may have phases different from one another. In addition, assuming that a period of emission of pulses of the laser scanning light is represented as "T", a phase difference between an mth periodic signal and the (m+1)th periodic signal may be less than "T".

In one aspect of the present invention, the phase difference between the mth periodic signal and the (m+1)th periodic signal may be T/(m+1). In one aspect of the present invention, the differences in phase may include a value of a first phase difference and a value of a second phase difference that is different from the value of the first phase difference. In one aspect of the present invention, the (m+1)th periodic signal may be obtained by inputting the mth periodic signal to a flip-flop circuit.

The present invention also provides a laser scanning apparatus including a first rotary body and a selecting unit. The first rotary body is configured to emit pulses of laser scanning light. The selecting unit is configured to select one of multiple periodic signals that determine timing of emission of pulses of the laser scanning light. The multiple periodic signals have the same frequency but have phases different from each other. The selecting unit is further configured to select another one of the multiple periodic signals after the rotary body rotates once in a condition in which one of the multiple periodic signals is selected.

In one aspect of the present invention, the multiple periodic signals may be generated by at least one flip-flop circuit. In one aspect of the present invention, flip-flop circuits may be provided in a multi-stage manner.

In one aspect of the present invention, assuming that a symbol "n" is a natural number of one or more, timing of emission of pulses of the laser scanning light for nth rotation of the first rotary body may be determined by a first periodic signal that is included in the multiple periodic signals. In this case, assuming that a symbol "m" is a natural number of one or more, the first periodic signal to an (m+1)th periodic signal that are included in the multiple periodic signals may have the same frequency, but may have phases different from one another, and timing of emission of pulses of the laser scanning light for (n+m)th rotation may be determined by the (m+1)th periodic signal. In addition, assuming that a period of emission of pulses of the laser scanning light is represented as "T", a phase difference between an mth periodic signal and the (m+1)th periodic signal may be less than "T".

In one aspect of the present invention, the laser scanning apparatus may further include a second rotary body that rotatably holds the first rotary body. In this case, a direction of the rotation axis of the first rotary body may be orthogonal to a direction of a rotation axis of the second rotary body. In one aspect of the present invention, the first rotary body may be configured to rotate vertically, whereas the second rotary body may be configured to rotate horizontally.

The present invention further provides a laser scanning method using a first rotary body that is configured to emit pulses of laser scanning light while rotating. The method includes emitting pulses of the laser scanning light in a direction orthogonal to a rotation axis of the first rotary body. The method also includes, assuming that a symbol "n" is a natural number of one or more, shifting a position of emission of pulses of the laser scanning light in the emission direction for (n+1)th rotation of the first rotary body, from a position of emission of pulses of the laser scanning light in the emission direction for nth rotation of the first rotary body.

The present invention further provides a laser scanning method using a first rotary body that is configured to emit pulses of laser scanning light. The method includes selecting one of multiple periodic signals that determine timing of emission of pulses of the laser scanning light. The multiple periodic signals have the same frequency but having phases different from one another. After the first rotary body rotates once in a condition in which one of the multiple periodic signals is selected, another one of the multiple periodic signals is selected.

The present invention further provides a non-transitory computer recording medium storing computer executable instructions for controlling laser scanning that uses a first rotary body. The first rotary body is configured to emit pulses of laser scanning light while rotating. The computer executable instructions are made to, when executed by a computer processor, cause the computer processor to emit pulses of the laser scanning light in a direction orthogonal to a rotation axis of the first rotary body. The computer executable instructions are made to, when executed by a computer processor, also cause the computer processor to, assuming that a symbol "n" is a natural number of one or more, shift a position of emission of pulses of the laser scanning light in the emission direction for (n+1)th rotation of the first rotary body, from a position of emission of pulses of the laser scanning light in the emission direction for nth rotation of the first rotary body.

The present invention further provides a non-transitory computer recording medium storing computer executable instructions for controlling laser scanning that uses a first rotary body. The first rotary body is configured to emit pulses of laser scanning light. The computer executable instructions are made to, when executed by a computer processor, cause the computer processor to select one of multiple periodic signals that determine timing of emission of pulses of the laser scanning light. The multiple periodic signals have the same frequency but having phases different from one another. After the first rotary body rotates once in a condition in which one of the multiple periodic signals is selected, another one of the multiple periodic signals is selected.

The present invention enables increasing scanning density of laser scanning at low cost.

### BRIEF DESCRIPTION OF DRAWINGS

Fig. 1 shows an external appearance of a laser scanning apparatus.
Fig. 2 is a block diagram of the laser scanning apparatus.
Fig. 3 is a conceptual drawing showing a state of an array of beams in laser scanning.
Fig. 4 is a conceptual drawing showing a state of an array of beams in laser scanning.
Fig. 5 is a circuit block diagram of a circuit that controls timing of scanning.
Fig. 6 is a conceptual drawing showing a state of an array of beams in laser scanning.
Fig. 7 shows timing for controlling horizontal rotation.
Fig. 8 is a conceptual drawing showing a state of an array of beams in laser scanning.
Fig. 9 is a conceptual drawing showing a state of an array of beams in laser scanning.
Fig. 10 is a conceptual drawing showing an overview of laser scanning.
Fig. 11 is a flowchart showing an example of a processing procedure.

### PREFERRED EMBODIMENTS OF THE INVENTION

### 1. First Embodiment

### Overview

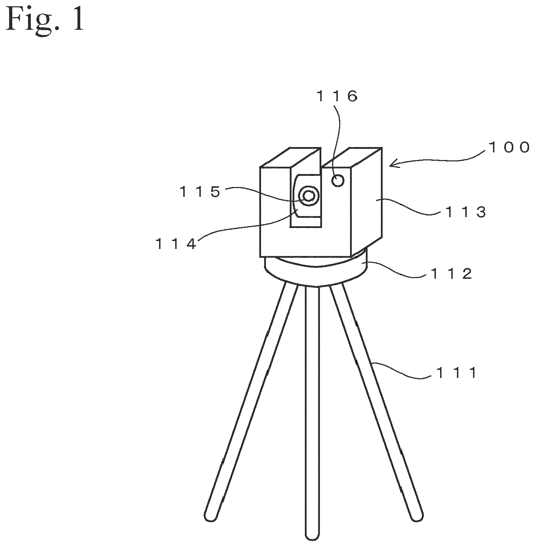

Fig. 1 shows an external appearance of a laser scanning apparatus (laser scanner) 100. The laser scanning apparatus 100 includes a tripod 111, a base 112 that is fixed on the top of the tripod 111, a horizontal rotation unit 113 that is a rotary body being horizontally rotatable on the base 112, and a vertical rotation unit 114 that is a rotary body being vertically rotatable relative to the horizontal rotation unit 113.

The vertical rotation unit 114 includes an optical unit 115 that emits and receives laser scanning light. The optical unit 115 emits pulses of laser scanning light. The emission of pulses is performed along a direction (plane) orthogonal to a rotation axis (axis extending in a horizontal direction) of the vertical rotation unit 114 while the vertical rotation unit 114 rotates. That is, the optical unit 115 emits pulses of laser scanning light along a vertical angle direction.

Laser scanning is conducted as follows: pulses of laser scanning light are emitted from the optical unit 115 while the horizontal rotation unit 113 is horizontally rotated as well as the vertical rotation unit 114 is vertically rotated, and the laser scanning light that is reflected back from a target object is received by the optical unit 115. In this example, the vertical rotation is relatively fast, and the horizontal rotation is relatively slow.

In more detail, scanning along a vertical angle direction (scanning in an upper-lower direction) is performed by making the optical unit 115 emit pulses of laser scanning light while the vertical rotation unit 114 is vertically rotated. In addition, the horizontal rotation unit 113 is horizontally rotated simultaneously. Thus, the scanning line (sweep line) along the vertical angle direction moves in such a manner as to slide along the horizontal angle direction. Due to the horizontal rotation performed at the same time as the vertical rotation, scanning along the vertical angle direction is not perfectly along the vertical direction, and it is performed along a line that is slightly oblique. On the condition that the horizontal rotation unit 113 is not rotated, scanning along the vertical angle direction is performed along the vertical direction.

Rotation of each of the horizontal rotation unit 113 and the vertical rotation unit 114 is performed by a motor. Each of the horizontal rotation angle of the horizontal rotation unit 113 and the vertical rotation angle of the vertical rotation unit 114 is accurately measured by an encoder.

The laser scanning light is one pulse of distance measuring light. One pulse of the laser scanning light is emitted to a scanning target point that reflects it, and a distance to this point is thereby measured. On the basis of this measured distance value and the direction of the laser scanning light, the position of the scanned point is calculated relative to the laser scanning apparatus 100.

In this state, on the condition that exterior orientation parameters (position and attitude) of the laser scanning apparatus 100 in an absolute coordinate system are known, the position of the scanned point in the absolute coordinate system is clarified. The absolute coordinate system is a coordinate system that is used in a map and in a GNSS. The position in the absolute coordinate system is described in terms of, for example, latitude, longitude, and elevation.

In one case, the laser scanning apparatus 100 outputs a laser-scanned point cloud by providing data of a distance and a direction related to each point (each scanned point). In another case, the laser scanning apparatus 100 internally calculates a position of each point in a certain coordinate system, and a three-dimensional coordinate position of each point is output as point cloud data. Data of the laser-scanned point cloud also contains information of luminance of each scanned point (intensity of light that is reflected back from each scanned point).

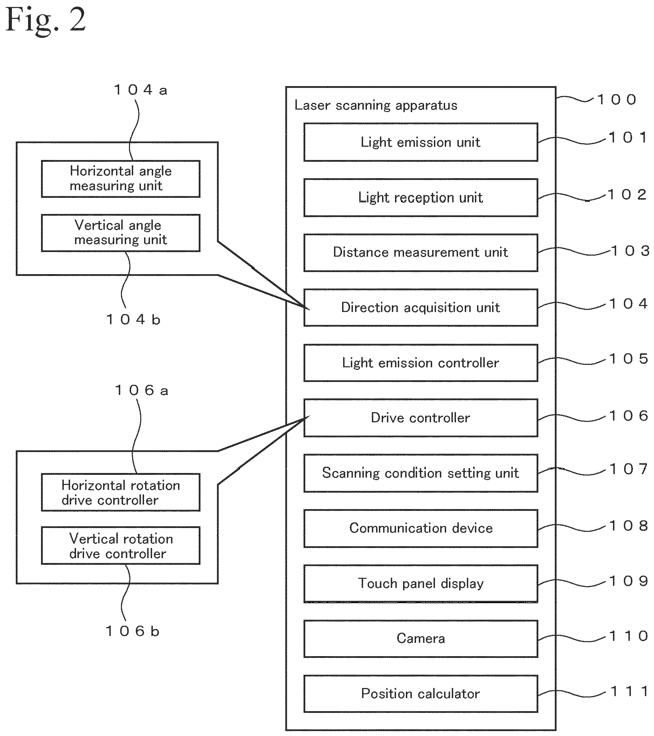

An optical system 116 of a camera 110 (refer to Fig. 2) is disposed on a front side of the horizontal rotation unit 113. A target of laser scanning can be photographed by this camera 110. Exterior orientation parameters (position and attitude) of the camera 110 in the laser scanning apparatus 100 are already known, and thus, it is possible to associate a photographic image obtained by the camera 110, with a laser-scanned point cloud. For example, a point cloud image can be obtained by superimposing a laser-scanned point cloud on a photographic image obtained by the camera 110.

Laser scanning density is set and adjusted by controlling rotation speeds of horizontal rotation and vertical rotation and controlling an interval of emission of laser scanning light. As the laser scanning light goes further into the distance, the pitch of the laser scanning light (distance between centers of laser-scanned points) is broader, and a cross-sectional area of a beam of laser scanning light increases.

The optical axis of the optical unit 115 corresponds to an optical axis of laser scanning light. The direction of this optical axis is used as a direction of the center of a beam of laser scanning light. In addition, a laser-scanned point, that is, a point at the center of reflection of laser scanning light, is on the extension of this optical axis.

Fig. 2 is a block diagram of the laser scanning apparatus 100. The laser scanning apparatus 100 includes a light emission unit 101, a light reception unit 102, a distance measurement unit 103, a direction acquisition unit 104, a light emission controller 105, a drive controller 106, a scanning condition setting unit 107, a communication device 108, a touch panel display 109, a camera 110, and a position calculator 111.

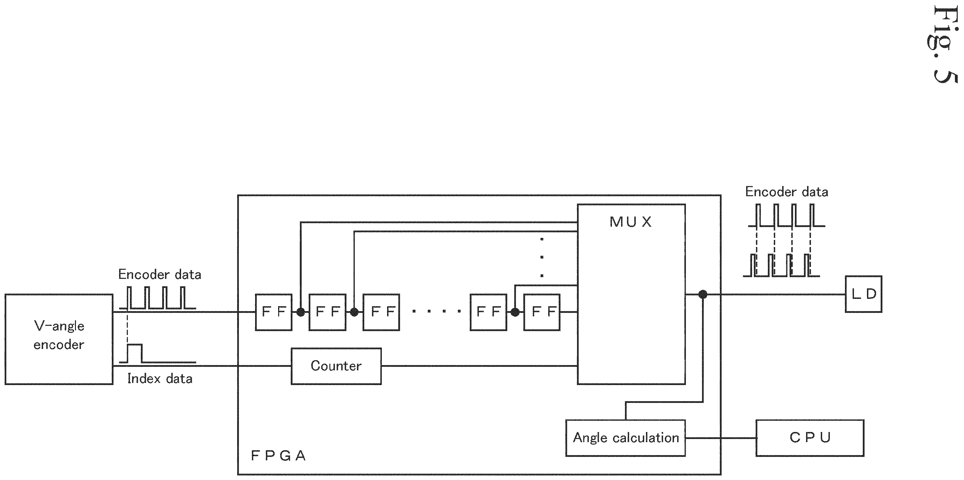

The laser scanning apparatus 100 includes a computer having a CPU, and one or more, or all, of the distance measurement unit 103, the direction acquisition unit 104, the light emission controller 105, the drive controller 106, the scanning condition setting unit 107, and the position calculator 111 are implemented by this computer. One or some of these functional units may be composed of a dedicated electronic circuit. As described later, in this embodiment, the drive controller 106 is partially composed of a dedicated electronic circuit having the configuration shown in Fig. 5.

The light emission unit 101 includes a light emitting element that emits laser scanning light and also includes an optical system and peripheral circuits related to emission of light. The light reception unit 102 includes a light emitting element that receives laser scanning light and also includes an optical system and peripheral circuits related to reception of light.

The distance measurement unit 103 calculates a distance from the laser scanning apparatus 100 to a point that reflects laser scanning light. In this example, a reference optical path is provided inside the laser scanning apparatus 100. Laser scanning light is output from the light emitting element and is split into two beams. One beam is emitted from the optical unit 115 to a target object, as laser scanning light, whereas the other beam is led to the reference optical path as reference light.

The laser scanning light is reflected back from the target object and is received at the optical unit 115, whereas the reference light propagates in the reference optical path. Then, these two beams are combined and are input to the light reception unit 102. The propagation distances of the laser scanning light and the reference light differ from each other, and therefore, the reference light is detected first by a light receiving element, and the laser scanning light is then detected by the light receiving element.

In terms of an output waveform of the light receiving element, a detection waveform of the reference light is output first, and a detection waveform of the laser scanning light is then output with a time interval. The distance to the point that reflects the laser scanning light is calculated from a phase difference (time difference) between the two waveforms. In another case, the distance can also be calculated from a time of flight of laser scanning light.

The direction acquisition unit 104 acquires a direction of the optical axis of laser scanning light. The direction of the optical axis is obtained by measuring an angle in the horizontal direction and an angle in the vertical direction. The direction acquisition unit 104 has a horizontal angle measuring unit 104a and a vertical angle measuring unit 104b.

The horizontal angle measuring unit 104a measures a horizontal rotation angle of the horizontal rotation unit 113. The horizontal rotation is rotation around the vertical direction. This angle is measured by an encoder. The encoder that is used herein has a measurement accuracy of 10 arc seconds or less, for example. In one example, an encoder having a resolution of 17 bits has an angle resolution of approximately a little less than 10 arc seconds. The angle resolution of 10 arc seconds means approximately 5 mm at a distance of 100 meters ahead in the horizontal direction.

The vertical angle measuring unit 104b measures a vertical rotation angle of the vertical rotation unit 114. The vertical rotation is rotation around the horizontal direction. This angle is measured by an encoder. The performance of this encoder is the same as that for the horizontal rotation angle.

Measuring a horizontal rotation angle of the horizontal rotation unit 113 and a vertical rotation angle of the vertical rotation unit 115 provides a direction of the optical axis of laser scanning light, that is, a direction of a laser-scanned point, as seen from the laser scanning apparatus 100.

The light emission controller 105 controls timing of emission of laser scanning light of the light emission unit 101. The following describes details of this control. Laser scanning is conducted as follows: pulses of laser scanning light are emitted from the optical unit 115 while the horizontal rotation unit 113 is horizontally rotated, as well as the vertical rotation unit 114 is vertically rotated, and the laser scanning light that is reflected back is received by the optical unit 115.

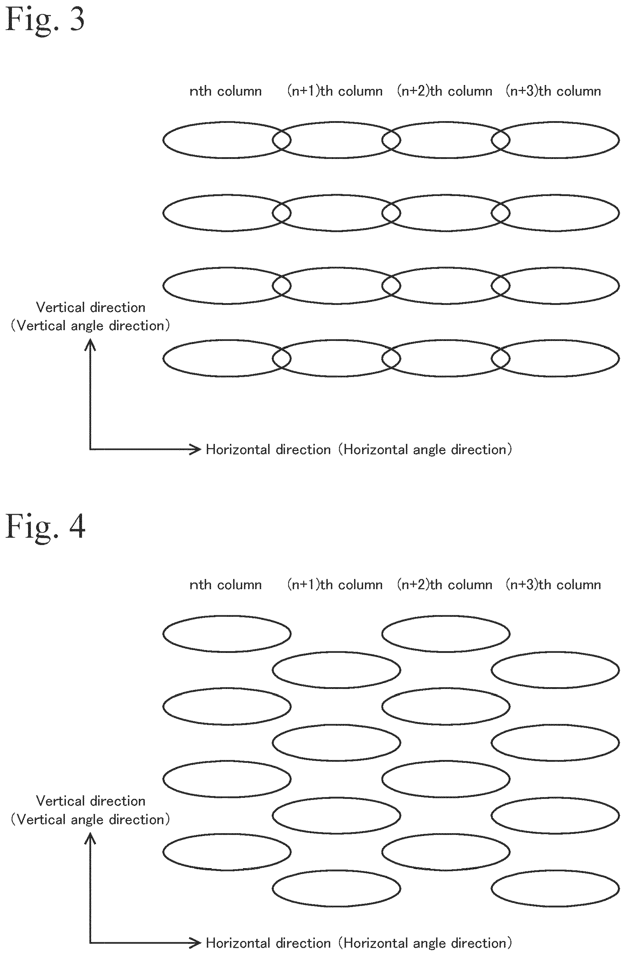

Fig. 3 is a conceptual drawing showing a state of an array of beams of laser scanning light in an existing technique. Fig. 3 shows a case of emitting a beam of laser light having an oblong elliptical cross section, in a spot-like manner. Laser scanning in the case in Fig. 3 is performed as follows. Laser scanning light is emitted in a spot-like manner while it scans from an upper side to a lower side or from a lower side to an upper side in the vertical direction. This operation is repeated while the scanning column (scanning line) is shifted from an nth column to an (n+1)th column and then to ..., in the horizontal direction. Herein, the effective area of the beam is defined as an area from the peak to half of the peak.

The horizontal rotation unit 113 continues rotating slowly while vertical scanning is performed. As a result, more exactly, vertical scanning is performed along a slightly oblique line. That is, the scanning line of vertical scanning is slightly slanted. This slightly slanted vertical scanning is performed by shifting the scanning line horizontally.

As described above, the pitch between scanned points increases as the laser scanning light goes further into the distance. In one example, the pitch between scanned points in the vertical direction (upper-lower direction) at a distance of 150 meters ahead is approximately 80 mm. This, of course, depends on specifications of a laser scanning apparatus; however, the pitch between scanned points tends to increase, particularly in a lower-cost laser scanning apparatus.

For example, it is assumed that a reflection prism of a size of 40 mm × 40 mm is used as a target to be measured. In this case, this reflection prism may be positioned at an interval between adjacent beams of scanning light in the vertical direction, and thus, scanning light may not be effectively reflected by the reflection prism. In addition, even if scanning light is reflected by the reflection prism, due to spread of beams, the number of measured points in the vertical direction is not sufficient, and required accuracy of positioning is not ensured. This phenomenon can occur not only in a case of targeting at a reflection prism, but also in the case of using a target object that requires accurate positioning.

In accurate positioning targeting at a reflection prism, it is necessary to obtain such a large number of measured points (scanned points) as 5 points × 5 points or more, from the reflection prism, and to calculate an average thereof or a geometric center thereof, in order to achieve required accuracy of positioning. Unfortunately, required accuracy is not achieved in the above-described example.

In consideration of this, in this embodiment, timings of vertical scanning in an nth column and an (n+1)th column are shifted from each other. Fig. 4 shows an example of this method. In this case, pitches of scanning in the upper-lower direction are constant, whereas positions of scanned points, that is, timings of emission of light in an nth column and an (n+1)th column are shifted from each other. Note that the symbol "n" is a natural number of one or more.

In more detail, pitches between pulses of emitted laser scanning light are the same, whereas the position (phase) of laser scanning light that is emitted in a spot-like manner in a vertical angle direction is shifted between the nth column and the (n+1)th column. This shift is adjusted so as to achieve a state in which each beam of laser scanning light in the (n+1)th column is positioned in each pitch between beams of laser scanning light in the nth column, as seen in the arrangement in the vertical direction.

From another point of view, this shift is adjusted so that a position of emission of each beam of laser scanning light for the (n+1)th column will be positioned in each space between positions of emission of beams of laser scanning light for the nth column, as seen in the vertical angle direction. Thus, for the two columns of the nth column and the (n+1)th column, spaces between positions of emission of light for the nth column are filled by emission of light for the (n+1)th column.

For example, the shift between a first column and a second column is performed by a half of an interval between pulses (half cycle of phase difference). In this case, as seen in the vertical angle direction, the middle of a pitch between positions irradiated with laser scanning light (scanned points) in the first column is filled with a position irradiated with laser scanning light in the second column. In other words, as seen in the vertical angle direction, a space between positions of emission of laser scanning light of first rotation is filled with a position of emission of laser scanning light of second rotation.

This idea can be applied also to the case of three or more columns in a similar manner. In one example, the shift (phase difference) between a first column, a second column, and a third column is performed by one-third of an interval between pulses. In this case, as seen in the vertical angle direction, a space between positions irradiated with laser scanning light in the first column is filled with positions irradiated with laser scanning light in the second and third columns. In other words, as seen in the vertical angle direction, a space between positions of emission of laser scanning light of first rotation is filled with positions of emission of laser scanning light of second and third rotation.

Fig. 5 shows a circuit block diagram for performing the processing described above. The circuit in Fig. 5 is an example of the light emission controller 105. In this example, the encoder that measures a vertical rotation angle of the vertical rotation unit 114 outputs two kinds of data: vertical angle (V-angle) encoder data that is angle information of a vertical angle, and index data that is output once per rotation in the upper-lower direction. The index data is output at the time when, for example, the optical unit 115 faces a direction in which a laser-scanned point cloud cannot be obtained. This direction in which a laser-scanned point cloud cannot be obtained includes a vertical downward direction and a direction in which the optical axis of laser scanning light interferes with the horizontal rotation unit 113.

In the configuration in Fig. 5, V-angle encoder data is input to a flip-flop (FF) circuit. The V-angle encoder is an example of the vertical angle measuring unit 104b in Fig. 2, and in this case, it also generates a periodic signal for controlling emission of light at the light emission unit 101. Multiple FF circuits are provided in a multi-stage manner and produce multiple pieces of delayed V-angle encoder data. The multi-staged FF circuits provide pieces of V-angle encoder data, in which phases are slightly shifted from each other. The pieces of the V-angle encoder data are periodic signals having the same frequency but having phases shifted from each other.

One of the pieces of the V-angle encoder data is selected by a multiplexer (MUX), and timing to supply drive voltage to a laser diode (LD), which is the light emitting element of the light emission unit 101, is determined based on the selected encoder data. The V-angle encoder data is a periodic signal that is obtained in accordance with rotation of the vertical rotation unit 114 that rotates constantly. This periodic signal causes the light emitting element to periodically emit light, resulting in emission of pulses of light.

Moreover, on the basis of the V-angle encoder data, the CPU of the laser scanning apparatus 100 calculates a vertical angle (V-angle).

In one example, it is assumed that an interval of emission of light (interval of emission of pulses of light) at the light emission unit 102 is Δt, and the number of stages of the FF circuits is four, and a delay (phase difference) at one FF circuit is Δt/4. In this case, the multiplexer (MUX) selects the FF circuit by changing one stage and obtains output from the selected FF circuit, each time of receiving an index signal.

In more detail, in relation to rotation control of the vertical rotation unit 114, emission of light is controlled based on output that is successively selected as follows: output from the first-stage FF circuit is selected for nth rotation, output from the second-stage FF circuit is selected for (n+1)th rotation, output from the third-stage FF circuit is selected for (n+2)th rotation, and output from the fourth-stage FF circuit is selected for (n+3)th rotation. For subsequent rotation, the stage of the FF circuit returns to the first-stage, and output from the first-stage FF circuit is selected for (n+4)th rotation.

In this case, timing of emission of light for (n+1)th rotation is shifted from that for nth rotation by Δt/4, in the same pulse frequency. Similarly, timing of emission of light for (n+2)th rotation is shifted from that for (n+1)th rotation by Δt/4, in the same pulse frequency. As a result, adjacent columns of scanned points in the upper-lower direction are shifted from each other in the upper-lower direction by the distance of (pitch between scanned points)/4.

In this example, assuming that an interval of emission of light is Δt, and outputs from the first-stage and the third-stage FF circuits are alternately selected per index, timing of emission of light for (n+1)th rotation is shifted from that for nth rotation by Δt/2, in the same pulse frequency. The scanning pattern of this case is illustrated in Fig. 4.

This scanning method does not narrow the pitch between scanned points in one column in the upper-lower direction (column extending in the vertical angle direction). However, from the point of view of two adjacent columns in the upper-lower direction, scanned points have the same pitch but are shifted from each other in the upper-lower direction (vertical angle direction). Thus, multiple columns in the upper-lower direction as a whole can improve scanning density in the upper-lower direction (vertical angle direction).

In the above-described case, scanning for nth rotation and scanning for (n+1)th rotation must be performed under the same conditions other than shift of timing of emission of light.

This idea can be generalized as follows. Assuming that symbols "n" and "m" are natural numbers of one or more, timing of emission of pulses of light for nth rotation is determined by a first periodic signal. The first periodic signal to the (m+1)th periodic signal have the same frequency but have phases that differ from one another. The timing of emission of pulses of light for (n+m)th rotation is determined by the (m+1)th periodic signal. The phase difference between the mth periodic signal and the (m+1)th periodic signal is T/(m+1), in which the symbol "T" is a period of emission of pulses of light (interval of emission of light).

In one example, in the case in which n = 1, and m = 1, timing of emission of pulses of light for first rotation is determined by a first periodic signal. The first periodic signal to the second periodic signal have the same frequency but have phases different from each other. The timing of emission of pulses of light for second rotation is determined by the second periodic signal. The phase difference between the first periodic signal and the second periodic signal is T/2, in which the symbol "T" is a period of emission of pulses of light.

In another example, in the case in which n = 1, and m = 3, timing of emission of pulses of light for first rotation is determined by a first periodic signal. The first periodic signal to the fourth periodic signal have the same frequency but have phases that differ from one another. The timing of emission of pulses of light for fourth rotation is determined by the fourth periodic signal. The phase difference between the third periodic signal and the fourth periodic signal is T/4, in which the symbol "T" is a period of emission of pulses of light.

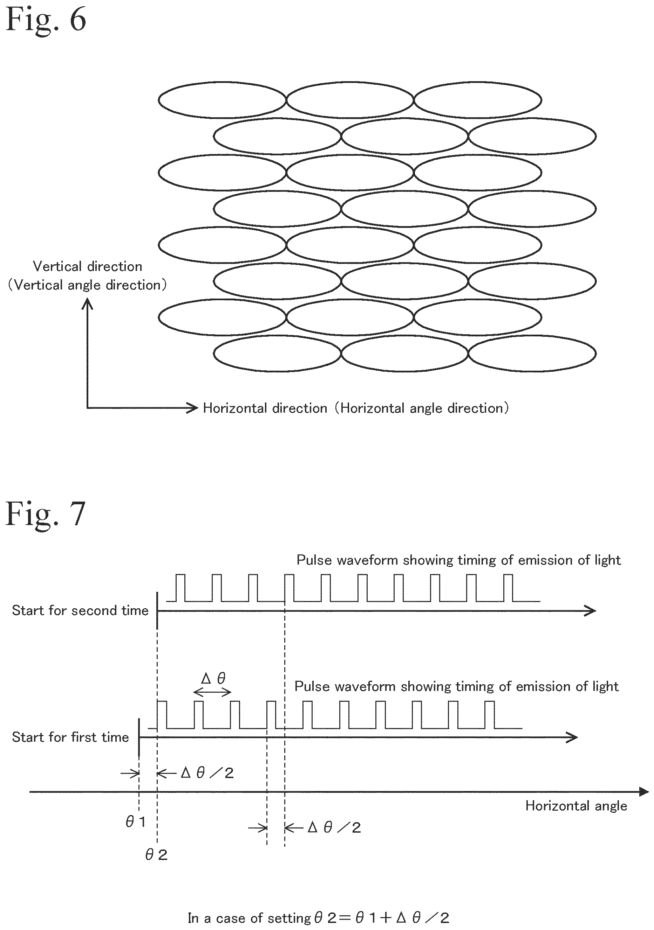

Moreover, for example, in addition to this scanning method, scanning density in the horizontal direction may be increased to improve scanning density in a two-dimensional plane, as illustrated in Fig. 6. The increase in scanning density in the horizontal direction is controlled by a horizontal rotation drive controller 106a, which will be described later.

Fig. 5 shows an example of a circuit for determining timing of emission of light based on data of an angle measured by an encoder. Another method of determining timing of emission of light includes using a reference clock signal for controlling emission of light. In this method, in response to emission of light, data of an angle at the time of this emission of light is obtained. This method can employ the method described in Fig. 5.

In this case, a reference clock signal for controlling emission of light is input to the multi-stage FF circuits, and reference clock signals that have phases shifted in a multi-stage manner are obtained. As in the case in Fig. 5, output of the FF circuit is selected based on index data that is output per rotation from the V-angle encoder. This case also provides effects similar to those described above.

The drive controller 106 controls horizontal rotation of the horizontal rotation unit 113 and vertical rotation of the vertical rotation unit 114. The drive controller 106 has a horizontal rotation drive controller 106a and a vertical rotation drive controller 106b. The horizontal rotation drive controller 106a controls driving of a motor for horizontal rotation. The vertical rotation drive controller 106b controls driving of a motor for vertical rotation of the vertical rotation unit 114.

In addition, the horizontal rotation drive controller 106a performs the following control. Laser scanning may be performed by repeatedly scanning a certain area, in some cases. For example, laser scanning is performed with coarse scanning density to search for a reflection prism, and laser scanning is then performed with high scanning density mainly on the reflection prism, to accurately measure a position of the reflection prism.

In this case, laser scanning is performed multiple times on a narrow area by targeting at the reflection prism. In such a situation, the horizontal rotation drive controller 106a performs the following control.

It is assumed that scanning is performed twice on a certain area. For example, an area of the horizontal angle of 40 to 45 degrees is scanned twice. Note that the horizontal angle is an angle that is measured in a clockwise direction from 0 degrees at the north as seen from above in the vertical direction.

Initially, first laser scanning is performed. Specifically, laser scanning is performed by rotating the horizontal rotation unit 113 in a range of the horizontal angle of 40 to 45 degrees while making the vertical rotation unit 114 rotate vertically. This laser scanning may be performed by together using the method of improving scanning density in the vertical angle direction, which is described in relation to Fig. 5.

Then, second laser scanning is performed. In second laser scanning, the horizontal rotation unit 113 returns back to the position at a horizontal angle at which the first scanning starts, and laser scanning starts from this position. However, in this embodiment, the horizontal rotation unit 113 does not return back to exactly the same position, but to a position slightly deviated therefrom, and laser scanning starts from this slightly deviated position. The frequency of second scanning is the same as that of first scanning. Although the entire scanning area is also deviated by the amount of deviation of the start position, the area of the second laser scanning mostly overlaps the area of the first laser scanning.

This state is shown in Fig. 7. Fig. 7 shows a case of deviating the start position in the horizontal direction (horizontal angle position) of second laser scanning from that of first laser scanning. While the scanned areas of the first laser scanning and the second laser scanning overlap each other, due to deviation in the start position, the pitch between adjacent pulses of light of first laser scanning is filled with a pulse of light of second laser scanning. The first laser scanning and the second laser scanning are performed under the same conditions, other than the start position.

In the case shown in Fig. 7, assuming that a horizontal angle position at which the first laser scanning starts is θ1, a horizontal angle position at which the second laser scanning starts is θ2, and a scanning pitch in the horizontal direction is Δθ, θ1 < θ2, and θ2 = (θ1 + Δθ/2).

Under these conditions, the horizontal angle position of the scanning line in the vertical angle direction of laser scanning light for the second time deviates from that for the first time by Δθ/2. The pitch in the horizontal direction of laser scanning light (laser scanning light in the column in the upper-lower direction) is Δθ, and thus, the second laser scanning is performed in such a manner as to fill the pitch of the first laser scanning light, in the horizontal angle direction.

Thus, the combination of the first and the second laser scanning in the horizontal direction provides a scanning density double the scanning density of laser scanning that is performed only once.

This principle can also be applied to the case of performing laser scanning three times. Specifically, it is assumed that a horizontal angle position at which first laser scanning starts is θ1, a horizontal angle position at which second laser scanning starts is θ2, a horizontal angle position at which third laser scanning starts is θ3, and a scanning pitch in the horizontal direction is Δθ, θ1 < θ2 < θ3, and angles are successively shifted by Δθ/3. In this case, θ2 = (θ1 + Δθ/3), and θ3 = (θ2 + Δθ/3). Thus, performing laser scanning three times from the first to the third time provides a scanning density in the horizontal angle direction that is triple the scanning density of laser scanning that is performed only once.

This idea can be generalized as follows: assuming that the number of repetitions of laser scanning in the horizontal angle direction is "M", and the pitch of scanning in the horizontal direction is Δθ, laser scanning is repeated on the same target object "M" times while the start positions are successively shifted by an angular difference of Δθ/M. This achieves M-fold scanning density in the horizontal direction. Note that the symbol "M" is a natural number of two or more. The number "M" is selected so that beams of laser scanning light will at least partially overlap one another. In addition, due to M > 2, the angle is shifted by less than Δθ.

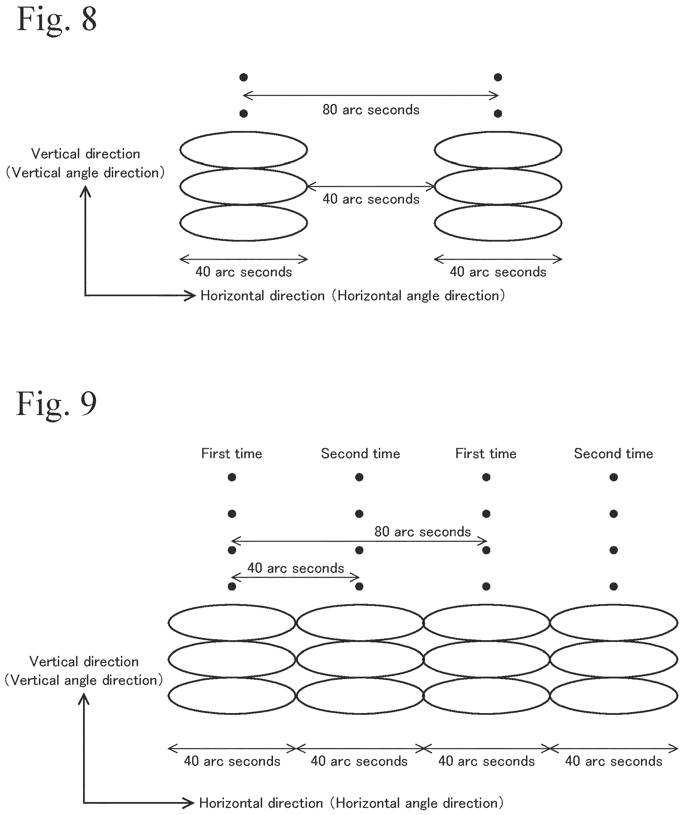

The following describes effects of this method from another point of view. Fig. 8 shows a state of distribution of beams of laser scanning light at positions separated by some distance in the horizontal direction. Herein, the dimension in the horizontal direction is represented in terms of an opening angle as seen from the optical origin. In one example, an opening angle of 10 arc seconds corresponds to a distance of approximately 5 mm at a distance of 100 meters ahead.

In the case of Fig. 8, the beam of laser scanning light has an elliptical cross sectional shape with a major axis in the horizontal direction, and the horizontal direction length of the cross section of the beam is 40 arc seconds at a position of a certain distance. Fig. 8 shows a case in which beams of this laser scanning light are lined up in the horizontal direction at a pitch of Δθ = 80 arc seconds. In this case, adjacent beams of laser scanning light in the horizontal direction has a pitch therebetween. In the state shown in Fig. 8, beams are positioned close to each other in the upper-lower direction (vertical angle direction).

Under these conditions, for example, an angle for shifting the start position of scanning is set to Δθ/2 = 40 arc seconds. Assuming that first laser scanning is performed as in Fig. 8, an angle position of second laser scanning is shifted by 40 arc seconds, and the pitch in the horizontal direction of the first laser scanning is filled with the beams of the second laser scanning, as shown in Fig. 9.

On the basis of this principle, Δθ may be set to 20 arc seconds, and third laser scanning may be performed. This enables laser scanning in which the pitch in the horizontal direction is further filled with the beams of the third laser scanning. The lower limit of Δθ depends on positioning accuracy of the horizontal angle of the horizontal rotation unit 113. A relationship θ1 > θ2 can also be adopted.

The scanning condition setting unit 107 sets various conditions related to laser scanning. For example, the scanning condition setting unit 107 performs setting to a mode of the above-described laser scanning for increasing the scanning density in the vertical angle direction, to a mode of the above-described laser scanning for increasing the scanning density in the horizontal angle direction, and to a laser scanning mode using both of these methods.

The communication device 108 communicates with an external device. Communication is performed by using, for example, a wireless LAN standard. Alternatively or additionally, a wired line, a mobile phone line, or optical communication can also be used.

The touch panel display 109 functions as a user interface (Ul) of the laser scanning apparatus 100. The touch panel display 109 is used to perform various operations and settings in the laser scanning apparatus 100. In addition, the touch panel display 109 shows various information related to operation of the laser scanning apparatus 100.

The camera 110 is a digital camera. The camera 110 can take still images and moving images. The position calculator 111 calculates a position of each laser-scanned point. The position of the laser-scanned point is calculated based on a distance to the laser-scanned point and a direction of the laser-scanned point as seen from an optical origin of the laser scanning apparatus 100. The position of the laser-scanned point may be calculated by an external PC or a server. The coordinate system for describing the position of each point is, for example, an absolute coordinate system. This case is prem-ised on the condition that exterior orientation parameters in the absolute coordinate system of the laser scanning apparatus 100 are already known.

### Example of Processing

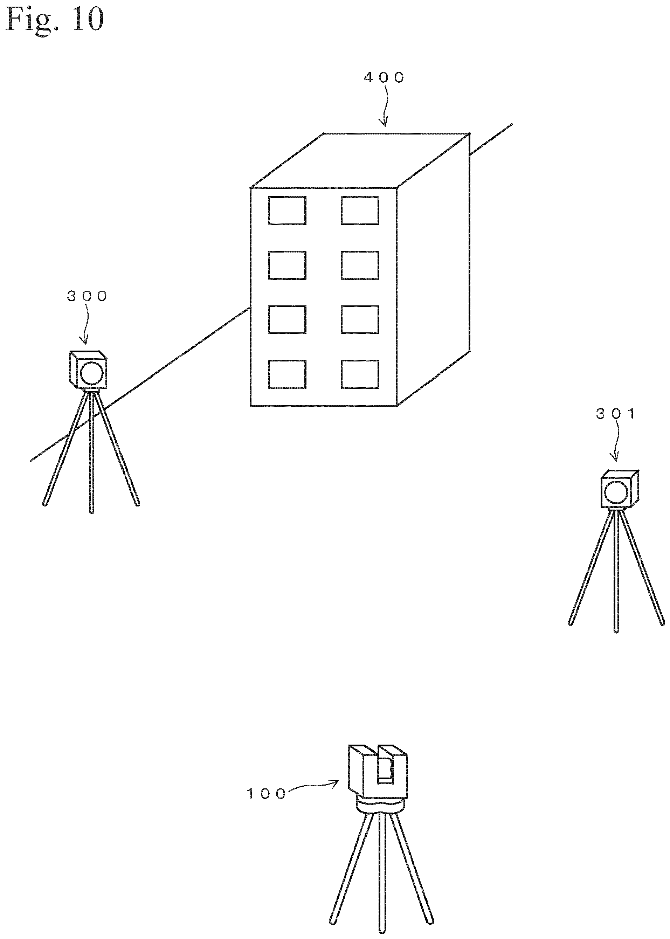

The following describes an example of laser scanning using the laser scanning apparatus 100. Fig. 10 is a conceptual drawing showing a situation at a site at which laser scanning is performed. First, prior to processing, the laser scanning apparatus 100 and reflection prisms 300 and 301 to be used as targets are set up.

Herein, an explanation is made about a case of obtaining a position and an attitude of the laser scanning apparatus 100 by using a method of resection in the conditions in which the position of the laser scanning apparatus 100 is unknown, whereas the reflection prisms 300 and 301 are set up at known positions. The number of the reflection prisms is not limited to two and may be three or more. Other types of reflective targets using a material, such as retroreflective beads or a retroreflector, can be used instead of the reflection prism.

After the position and the attitude of the laser scanning apparatus 100 are calculated, laser scanning is performed on a surveying target, such as a building 400, by using the laser scanning apparatus 100. This operation can be performed by ordinary processes, and therefore, descriptions thereof are omitted.

In contrast to the above-described case, in the condition in which the position of the laser scanning apparatus 100 is already known, whereas the positions of the reflection prisms 300 and 301 are unknown, the positions of the reflection prisms 300 and 301 may be measured.

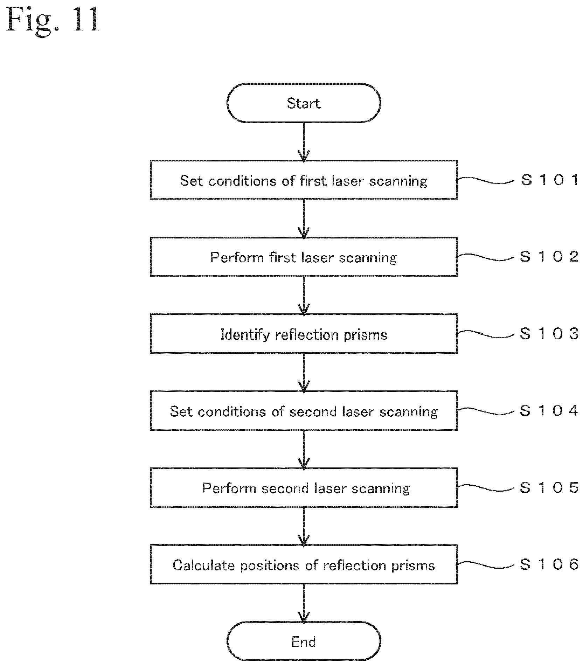

Fig. 11 shows an example of a processing procedure. A program for executing the processing in Fig. 11 is stored in an appropriate storage medium and is executed by the computer assembled in the laser scanning apparatus 100. The processing in Fig. 11 may be executed by an external computer, and the laser scanning apparatus 100 may be controlled from the outside.

After the processing starts, first, conditions for first laser scanning are set (step S101). The first laser scanning is performed on a wide area containing the reflection prisms 300 and 301 (e.g., 360-degree circumference).

The first laser scanning is performed for the purpose of capturing the reflection prisms 300 and 301 and is thus performed with relatively coarse scanning density. For example, scanning density is set so that approximately four beams will enter each of the reflection prisms 300 and 301 in the first laser scanning. Specifically, in one example, scanning conditions are set so that two beams in the horizontal angle direction and two beams in the vertical angle direction will enter each of the reflection prisms 300 and 301.

In a case of slightly low accuracy, scanning conditions can be set so that one beam in the horizontal angle direction and two beams in the vertical angle direction will enter, or so that two beams in the horizontal angle direction and one beam in the vertical angle direction will enter.

Increasing scanning density of the first laser scanning enables more reliably capturing of the reflection prisms 300 and 301, but this takes more time for scanning and uses more electric power. In consideration of this, conditions of the first laser scanning are set.

Next, the first laser scanning is performed by using the laser scanning apparatus 100 (step S102). Then, points from which light having an intensity of a predetermined threshold or higher is reflected back, are extracted from among laser-scanned point clouds (laser scanning data) obtained by the first laser scanning. Thus, light reflected from each of the reflection prisms 300 and 301 is detected (step S103). The light reflected from the prism exhibits very high intensity when being received, and therefore, this reflected light having extremely high intensity is used as a threshold, in order to distinguish between the prism and other structures. In this manner, directions and distances of the reflection prisms 300 and 301 as seen from the laser scanning apparatus 100 are obtained.

If the reflected light has excessively high intensity, distance information may not be correctly obtained due to overload of input to the light reception unit 102. In this case, information of approximate distance containing error is obtained.

The first laser scanning may be performed by reducing output of laser scanning light, decreasing intensity of incident light with the use of a neutral density filter, or other method, in order to prevent the light reception unit 102 from being saturated with high-intensity light reflected from the reflection prism.

Each of the reflection prisms 300 and 301 has a mirror surface as a reflection surface. The mirror surface has a high reflectivity, and thus, light reflected from the mirror surface has an intensity higher than that of light reflected from other objects. This phenomenon is used to identify reflection from the reflection prisms 300 and 301. The reflection prisms 300 and 301 can also be identified by image recognition that uses photographic images obtained by the camera 110.

After the reflection prisms 300 and 301 are identified, conditions of second laser scanning that is specialized for accurate positioning of the reflection prisms 300 and 301 are set (step S104). In this process, conditions of the second laser scanning are set so as to increase scanning density more than that of the first laser scanning, by using one or both of two modes: a mode for increasing the scanning density in the vertical angle direction, which is described in relation to Figs. 4 and 6, and a mode for increasing the scanning density in the horizontal angle direction, which is described in relation to Figs. 8 and 9.

The following describes an example of conditions of the second laser scanning. Herein, conditions of the second laser scanning with respect to the reflection prism 300 will be described. In this case, first, a laser scanning density that is required at the position of the reflection prism 300 is calculated from the distance from the laser scanning apparatus 100 to the reflection prism 300, which is obtained in step S103.

For example, the reflection prism 300 is a 50-mm square, and scanned points of 10 × 10 (100 points in total) are to be obtained. On the other hand, the scanning density in the vertical angle direction (upper-lower direction) at the position of the reflection prism 300 is 2 points/50 mm.

Under these conditions, the scanning density in the upper-lower direction is increased by five times so as to be 10 points/50 mm, whereby the desired number of points is obtained. In order to increase the scanning density of scanned points in the vertical angle direction by five times, the method that is described in relation to Fig. 4 is used.

Herein, it is assumed that the interval of scanning in vertical rotation is At. In this case, the FF circuits in Fig. 5 are used to shift start time of scanning in (n+1)th vertical rotation from start time of scanning in nth vertical rotation by Δt/5.

Thus, adjacent columns of vertically scanned points are shifted in the vertical rotation direction (vertical direction) by a distance of 1/5 of the scanning pitch. As a result, five columns in the upper-lower direction as a whole provide a five-fold scanning density in the vertical rotation direction (vertical direction).

In addition, it is assumed that the scanning density in the horizontal direction is 2 points/50 mm, that is, a pitch between scanned points is 25 mm. In order to quintuple this scanning density, laser scanning is selectively (locally) performed five times by targeting at the reflection prism 300. In this case, the method that is described in relation to Figs. 7 to 9 is employed so that a pitch between scanned points in the horizontal direction will result in 5 mm.

In more detail, assuming that the scanning pitch of 25 mm is converted into an angle α, and a horizontal angle position at which second laser scanning for the first time starts is θ, the horizontal angle position at which second laser scanning for the second time starts is θ+α/5. Similarly, the horizontal angle position at which second laser scanning for the third time starts is θ+2α/5, the horizontal angle position at which second laser scanning for the fourth time starts is θ+3α/5, and the horizontal angle position at which second laser scanning for the fifth time starts is θ+4α/5. In this manner, the scanning density in the horizontal angle direction results in 10 points/50 mm.

The scanning density in the vertical angle direction is actually not increased in one column in the upper-lower direction (one column in the vertical angle direction). In consideration of this point, the scanning density in the horizontal angle direction is set to be high so as to result in a desired scanning density.

The setting of the scanning density in the vertical angle direction and the setting of the scanning density in the horizontal angle direction are determined in consideration of the pitch of scanning light, the shape of beam of scanning light, and a required scanning density.

Although an example of setting conditions of the second laser scanning for the reflection prism 300 is described herein, setting of the second laser scanning for the reflection prism 301 is also performed in the same manner.

After conditions of the second laser scanning are set, the second laser scanning is performed (step S105). In the second laser scanning, laser scanning is performed at high density compared with the first laser scanning.

After the second laser scanning is performed, accurate positioning is performed on the reflection prisms 300 and 301, based on results of the second laser scanning. For example, scanned points of 10 × 10 points are obtained from the reflection prism. In this case, the position of the corresponding reflection prism is calculated from an average of the positioned points of 100 points in total. Alternatively, the position of the corresponding reflection prism is calculated from a weighted average of 100 points in which reflection intensity is considered.

### Advantageous Effects

For example, the circuit configuration in Fig. 5 can be implemented at low cost by using an FPGA. The control in Fig. 9 can be implemented by preparing software and does not require additional hardware. Overall, scanning density can be increased at low cost while basic specifications of the laser scanning apparatus are used as they are.

### Other Matters

A laser scanning apparatus having two rotation axes may be operated in such a manner that vertical rotation is performed at relatively low speed, whereas horizontal rotation is performed at relatively high speed. In this case, the method that is described in relation to Fig. 4 may be employed to drive the horizontal rotation unit, and the method described in relation to Figs. 7 to 9 may be employed to drive the vertical rotation unit.

A laser scanning apparatus that has a structure of the laser scanning apparatus 100 that is turned sideways by 90 degrees, can also be used. In this structure, the horizontal rotation unit 113 rotates vertically, whereas the vertical rotation unit 114 rotates horizontally. For example, a laser scanning apparatus to be mounted on a movable body has such a structure. The angle of turning sideways is not limited to 90 degrees and can be 45 or 60 degrees.

The invention that is disclosed in this specification can also be used in a structure other that the structure of the laser scanning apparatus having two rotation units that rotate on respective axes, as shown in Fig. 1. For example, the vertical rotation unit 114 may not rotate, and a scanning optical system using a polygonal mirror or a galvanometer mirror, or an electronic scanning optical system using a semiconductor device, may be adopted to the vertical rotation unit 114. In this structure, the invention that is disclosed in this specification can be used in driving the horizontal rotation unit 113.

A laser scanning apparatus to be disposed on a movable body may have only one rotation unit. This laser scanning apparatus can perform laser scanning along a certain plane, but it can perform laser scanning in a wide range due to movement of the movable body. The invention that is disclosed in this specification can also be used in driving the rotation unit of the laser scanning apparatus having such a structure.

The method illustrated in Fig. 5 is simple but useful. That is, on the basis of a signal for determining timing of first emission of pulses of light, a signal for determining timing of second emission of pulses of light is determined, and a signal for determining timing of nth emission of pulses of light is also determined. However, other methods can also be employed.

For example, a first signal generator circuit that generates a signal for determining timing of first emission of pulses of light by adding a certain phase difference, a second signal generator circuit that generates a signal for determining timing of second emission of pulses of light by adding a certain phase difference, ..., and an nth signal generator circuit that generates a signal for determining timing of nth emission of pulses of light by adding a certain phase difference, are prepared. Under these conditions, a signal that is shifted by the certain phase difference is selected per rotation, as in the case described in relation to Fig. 5, whereby a pattern of scanning beams as illustrated in Fig. 4 is obtained.

The laser scanning apparatus 100 may perform 360-degree circumferential scanning by using the method described in relation to Figs. 7 to 9, whereby scanning density of 360-degree circumferential scanning may be increased. In this case, ordinary 360-degree circumferential scanning is performed two or more times. Specifically, while the horizontal rotation unit 113 is rotated multiple times by 360 degrees, the start position of (n+1)th rotation is shifted from the start position of nth rotation. The method of shifting the start position is the same as that described in relation to Figs. 7 to 9.

In one example, in order to double the scanning density in the horizontal angle direction, the horizontal rotation unit 113 is rotated twice. In addition, the start angle position of second rotation is shifted from the start angle position of first rotation by an angle corresponding to half of a pitch between scanned points (space between positions of emission of light) in the horizontal angle direction.

In another example, in order to triple the scanning density in the horizontal angle direction, the horizontal rotation unit 113 is rotated three times. In addition, the start angle position of second rotation is shifted from the start angle position of first rotation by an angle corresponding to one-third of a pitch between scanned points in the horizontal angle direction. Then, the start angle position of third rotation is shifted from the start angle position of the second rotation by an angle corresponding to one-third of the pitch between scanned points in the horizontal angle direction.

This method takes a long time to perform scanning, but it increases the scanning density in the horizontal angle direction.

### 2. Second Embodiment

The flip-flop (FF) circuit of the FPGA can be freely varied in phase difference. For example, the phase difference of the second-stage FF circuit may be set to T/2 relative to the first-stage FF circuit, the phase difference of the third-stage FF circuit may be set to T/100 relative to the second-stage FF circuit, and the phase difference of the fourth-stage FF circuit may be set to T/12 relative to the third-stage FF circuit.

In one example, a T-shaped reflector other than a prism may be scanned. In this case, it is desired to first densely emit beams of laser scanning light in a vertical direction. Thus, at the start of scanning, laser scanning is performed at such a small phase difference (pitch) as T/(m+20). The T-shaped reflector has a vertically long shape at the center part, at which scanning can be performed with rough scanning density. In view of this, laser scanning is performed on the center part at such a large phase difference (pitch) as T/(m+1). After the center part is scanned, laser scanning is again performed at such a small phase difference (pitch) as T/(m+20).

The scanning density may be varied in accordance with the shape of a target to be scanned, during scanning, as described above. This enables shortening of the time required to scan while obtaining high scanning accuracy.

## Claims

1. A laser scanning apparatus comprising:
a first rotary body configured to emit pulses of laser scanning light while rotating; and
a controller configured to control emission of pulses of the laser scanning light,
pulses of the laser scanning light being emitted in a direction orthogonal to a rotation axis of the first rotary body,
the controller further configured to, assuming that a symbol "n" is a natural number of one or more,
shift a position of emission of pulses of the laser scanning light in the emission direction for (n+1)th rotation of the first rotary body, from a position of emission of pulses of the laser scanning light in the emission direction for nth rotation of the first rotary body.

2. The laser scanning apparatus according to claim 1, wherein timing of emission of pulses of the laser scanning light for the nth rotation is determined by a first periodic signal,
assuming that a symbol "m" is a natural number of one or more,
timing of emission of pulses of the laser scanning light for (n+m)th rotation is determined by an (m+1)th periodic signal,
the first periodic signal to the (m+1)th periodic signal have the same frequency but have phases different from one another, and
assuming that a period of emission of pulses of the laser scanning light is represented as "T",
a phase difference between an mth periodic signal and the (m+1)th periodic signal is less than "T".

3. The laser scanning apparatus according to claim 1 or 2, wherein the phase difference between the mth periodic signal and the (m+1)th periodic signal is T/(m+1).

4. The laser scanning apparatus according to claim 2, wherein the differences in phase include a value of a first phase difference and a value of a second phase difference that is different from the value of the first phase difference.

5. The laser scanning apparatus according to any one of claims 1 to 4, wherein the (m+1)th periodic signal is obtained by inputting the mth periodic signal to a flip-flop circuit.

6. A laser scanning apparatus comprising:
a first rotary body configured to emit pulses of laser scanning light; and
a selecting unit configured to select one of multiple periodic signals that determine timing of emission of pulses of the laser scanning light,
the multiple periodic signals having the same frequency but having phases different from each other,
the selecting unit further configured to select another one of the multiple periodic signals after the rotary body rotates once in a condition in which one of the multiple periodic signals is selected.

7. The laser scanning apparatus according to claim 6, wherein the multiple periodic signals are generated by at least one flip-flop circuit.

8. The laser scanning apparatus according to claim 7, wherein flip-flop circuits are provided in a multi-stage manner.

9. The laser scanning apparatus according to any one of claims 6 to 8, wherein,
assuming that a symbol "n" is a natural number of one or more,
timing of emission of pulses of the laser scanning light for nth rotation of the first rotary body is determined by a first periodic signal that is included in the multiple periodic signals,
assuming that a symbol "m" is a natural number of one or more,
the first periodic signal to an (m+1)th periodic signal that are included in the multiple periodic signals, have the same frequency but have phases different from one another, and
timing of emission of pulses of the laser scanning light for (n+m)th rotation is determined by the (m+1)th periodic signal, and
assuming that a period of emission of pulses of the laser scanning light is represented as "T",
a phase difference between an mth periodic signal and the (m+1)th periodic signal is less than "T".

10. The laser scanning apparatus according to any one of claims 1 to 9, further comprising a second rotary body that rotatably holds the first rotary body, a direction of the rotation axis of the first rotary body being orthogonal to a direction of a rotation axis of the second rotary body.

11. The laser scanning apparatus according to claim 8, wherein the first rotary body is configured to rotate vertically, whereas the second rotary body is configured to rotate horizontally.

12. A laser scanning method using a first rotary body that is configured to emit pulses of laser scanning light while rotating, the method comprising:
emitting pulses of the laser scanning light in a direction orthogonal to a rotation axis of the first rotary body; and
assuming that a symbol "n" is a natural number of one or more,
shifting a position of emission of pulses of the laser scanning light in the emission direction for (n+1)th rotation of the first rotary body, from a position of emission of pulses of the laser scanning light in the emission direction for nth rotation of the first rotary body.

13. A laser scanning method using a first rotary body that is configured to emit pulses of laser scanning light, the method comprising:
selecting one of multiple periodic signals that determine timing of emission of pulses of the laser scanning light,
the multiple periodic signals having the same frequency but having phases different from one another,
wherein, after the first rotary body rotates once in a condition in which one of the multiple periodic signals is selected, another one of the multiple periodic signals is selected.

14. A non-transitory computer recording medium storing computer executable instructions for controlling laser scanning that uses a first rotary body, the first rotary body configured to emit pulses of laser scanning light while rotating, the computer executable instructions being made to, when executed by a computer processor, cause the computer processor to:
emit pulses of the laser scanning light in a direction orthogonal to a rotation axis of the first rotary body; and
assuming that a symbol "n" is a natural number of one or more,
shift a position of emission of pulses of the laser scanning light in the emission direction for (n+1)th rotation of the first rotary body, from a position of emission of pulses of the laser scanning light in the emission direction for nth rotation of the first rotary body.

15. A non-transitory computer recording medium storing computer executable instructions for controlling laser scanning that uses a first rotary body, the first rotary body configured to emit pulses of laser scanning light, the computer executable instructions being made to, when executed by a computer processor, cause the computer processor to:
select one of multiple periodic signals that determine timing of emission of pulses of the laser scanning light,
the multiple periodic signals having the same frequency but having phases different from one another,
wherein, after the first rotary body rotates once in a condition in which one of the multiple periodic signals is selected, another one of the multiple periodic signals is selected.
